(19) Europäisches Patentamt / European Patent Office / Office européen des brevets

(11) **EP 3 189 979 B1**

(12) **EUROPEAN PATENT SPECIFICATION**

(45) Date of publication and mention
of the grant of the patent:
**04.09.2019 Bulletin 2019/36**

(51) Int Cl.:
**B60C 9/14** *(2006.01)*  **B60C 15/06** *(2006.01)*

(21) Application number: **17150056.4**

(22) Date of filing: **02.01.2017**

(54) **PNEUMATIC TIRE**

LUFTREIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.01.2016 JP 2016002663**

(43) Date of publication of application:
**12.07.2017 Bulletin 2017/28**

(73) Proprietor: **Sumitomo Rubber Industries, Ltd.
Kobe-shi,
Hyogo-ken 651-0072 (JP)**

(72) Inventor: **Tsukamoto, Kimikazu
Kobe-shi, Hyogo 651-0072 (JP)**

(74) Representative: **Manitz Finsterwald
Patent- und Rechtsanwaltspartnerschaft mbB
Martin-Greif-Strasse 1
80336 München (DE)**

(56) References cited:
**EP-A1- 0 638 445      EP-A1- 1 481 822
FR-A1- 2 866 829      JP-A- S6 463 402
US-A- 3 292 681       US-A- 3 717 190**

**Description**

This application claims priority on Patent Application No. 2016-002663 filed in JAPAN on January 8, 2016.

BACKGROUND OF THE INVENTION

Field of the Invention

The present invention relates to pneumatic tires.

Description of the Related Art

Reduction in weight of pneumatic tires is required in order to improve fuel efficiency of vehicles. From the viewpoint of the reduction in weight, reduction in volume of rubber of tires is considered. However, reduction in volume of rubber causes reduction in stiffness and durability of tires.

In JP2014-113957 (US2014/0158270), a tire that has a buttress reinforcing layer in a buttress portion is disclosed. The buttress reinforcing layer includes cords and topping rubber. The buttress reinforcing layer is disposed between a carcass and a belt layer. The buttress reinforcing layer contributes to increase of volume of rubber in the buttress portion. The buttress reinforcing layer contributes to improvement of stiffness of the tire. Further, the buttress reinforcing layer allows damage to a carcass cord to be reduced and contributes to improvement of durability of the tire.

The tire is obtained by vulcanizing an unvulcanized green tire. In the vulcanization, the green tire is heated and pressurized. In the vulcanization, the carcass of the green tire is drawn out, and a rubber material flows. In the vulcanization, the thickness of the rubber material around the carcass is likely to be also reduced. In particular, in the tire in which the thickness of the rubber material is reduced, the carcass is more likely to be drawn out, and the thickness of the rubber material is more likely to be reduced. Also in the tire having the buttress reinforcing layer, the volume of the rubber in the buttress portion is likely to be reduced in the vulcanization. Also in this tire, improvement of stiffness and durability, and increased reduction in weight are required.

Other known pneumatic tires are disclosed in EP0638445-A, US3717190-A and US3292681-A.

An object of the present invention is to provide a tire that is excellent in stiffness and durability, and that can be reduced in weight.

SUMMARY OF THE INVENTION

A pneumatic tire according to the present invention is defined in claim 1. The pneumatic tire according to the present invention includes: a tread; a pair of sidewalls; a pair of beads; a carcass; and a buttress reinforcing layer. The sidewalls extend almost inward from ends, respectively, of the tread in a radial direction. The beads are disposed inward of the sidewalls, respectively, in the radial direction. The carcass is extended on and between one of the beads and the other of the beads, along inner sides of the tread and the sidewalls. The carcass includes a first ply and a second ply. The first ply and the second ply each have a main portion that is extended on and between the beads on both sides. The buttress reinforcing layer is formed of a rubber sheet. The buttress reinforcing layer extends along the first ply and the second ply between the first ply and the second ply. An outer end of the buttress reinforcing layer is disposed inward of a shoulder region of the tread in the radial direction. An inner end of the buttress reinforcing layer is disposed at a maximum width position of the tire or disposed outward of the maximum width position of the tire in the radial direction.

The tire includes a bead reinforcing layer. The bead reinforcing layer extends outward from each bead in the radial direction. An outer end of the bead reinforcing layer is disposed at the maximum width position of the tire or disposed inward of the maximum width position of the tire in the radial direction.

Preferably, when Hb represents a height at the outer end of the bead reinforcing layer, and Hw represents a maximum width position height of the tire, the tire satisfies the following relational expression (1):

$$(Hb - Hw) \geq -10 \quad \text{mm} \quad (1).$$

Preferably, the tire incudes a belt that is layered over the carcass in a portion inward of the tread in the radial direction. The outer end of the buttress reinforcing layer is disposed inward of an outer end of the belt in an axial direction. A width Wa from the outer end of the buttress reinforcing layer to the outer end of the belt is greater than or equal to 10 mm and not greater than 20 mm.

Preferably, when Hs represents a height at the inner end of the buttress reinforcing layer, and Hw represents a maximum width position height of the tire, the tire satisfies the following relational expression (2):

$$(Hs-Hw) \leq 15 \qquad mm \ (2).$$

Preferably, in the tire, a thickness T of the buttress reinforcing layer is greater than or equal to 0.8 mm and not greater than 1.2 mm.

Preferably, the first ply and the second ply each include a carcass cord and topping rubber. The carcass cord is formed of a polyester fiber.

In the tire according to the present invention, the buttress reinforcing layer is disposed between the first ply and the second ply. Thus, the thickness of rubber of the buttress reinforcing layer is inhibited from being reduced during vulcanization. In the tire, even when the thickness and the weight of the rubber material are reduced, reduction of stiffness and durability can be inhibited.

BRIEF DESCRIPTION OF THE DRAWINGS

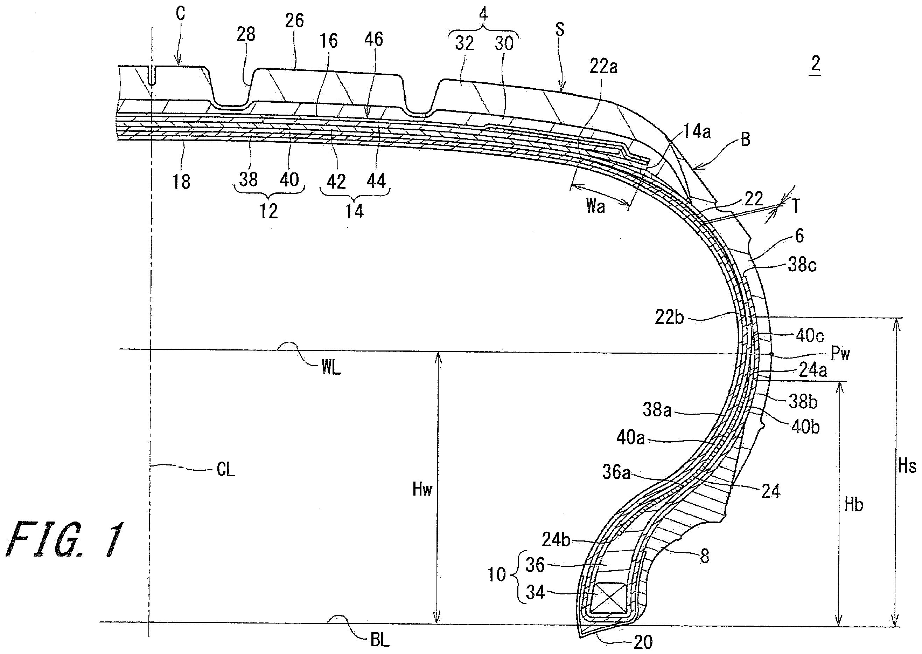

FIG. 1 is a cross-sectional view of a part of a pneumatic tire according to one embodiment of the present invention.

DESCRIPTION OF THE PREFERRED EMBODIMENTS

The following will describe in detail the present invention based on preferred embodiments with reference where appropriate to the accompanying drawing.

FIG. 1 shows a pneumatic tire 2. In FIG. 1, the up-down direction represents the radial direction of the tire 2, the left-right direction represents the axial direction of the tire 2, and the direction perpendicular to the surface of the drawing sheet represents the circumferential direction of the tire 2.

The tire 2 includes a tread 4, sidewalls 6, clinches 8, beads 10, a carcass 12, a belt 14, a band 16, an inner liner 18, chafers 20, buttress reinforcing layers 22, and bead reinforcing layers 24. The tire 2 is of a tubeless type. The tire 2 is mounted to, for example, an SUV (sport utility vehicle).

In FIG. 1, an alternate long and short dash line CL represents the equator plane of the tire 2. The shape of the tire 2 is symmetric about the equator plane except for a tread pattern. A solid line BL represents a bead base line. The bead base line represents a line that defines a rim diameter of a normal rim (see JATMA) on which the tire 2 is mounted. The bead base line extends in the axial direction. A solid line WL represents a straight line that extends through the maximum width points of the tire 2 in the axial direction. A point Pw represents a point, on the outer surface of the sidewall 6, which is at the outermost position in the axial direction. The straight line WL extends through the point Pw in the axial direction.

The tread 4 has a shape that projects outward in the radial direction. The tread 4 forms a tread surface 26 that can contact with a road surface. In the tread surface 26, grooves 28 are formed. A tread pattern is formed by the grooves 28. The tread 4 includes a base layer 30 and a cap layer 32. The cap layer 32 is disposed outward of the base layer 30 in the radial direction. The cap layer 32 is layered over the base layer 30. The base layer 30 is formed of crosslinked rubber excellent in adhesiveness. A typical base rubber of the base layer 30 is natural rubber. The cap layer 30 is formed of crosslinked rubber excellent in wear resistance, heat resistance, and grip performance. The tread 4 has a center region C disposed at the center in the axial direction, and a pair of shoulder regions S disposed outward of the center region C in the axial direction.

The sidewalls 6 extend almost inward from the ends of the tread 4 in the radial direction. The outer side ends, in the radial direction, of the sidewalls 6 are jointed to the shoulder regions S of the tread 4. The inner side ends, in the radial direction, of the sidewalls 6 are joined to the clinches 8. The sidewalls 6 are formed of crosslinked rubber excellent in cut resistance and weather resistance. The sidewalls 6 prevent damage to the carcass 12.

The clinches 8 are disposed almost inward of the sidewalls 6 in the radial direction. The clinches 8 are disposed outward of the beads 10 and the carcass 12 in the axial direction. The clinches 8 are formed of crosslinked rubber excellent in wear resistance. The clinches 8 contact with flanges of a rim.

The beads 10 are disposed inward of the clinches 8 in the axial direction. Each bead 10 includes a core 34 and an apex 36 that extends outward from the core 34 in the radial direction. The core 34 is ring-shaped, and includes a non-stretchable wound wire. The typical material of the wire is steel. The apex 36 is tapered toward an end 36a on the outer side in the radial direction. The apex 36 is formed of highly hard crosslinked rubber.

The carcass 12 includes a first ply 38 and a second ply 40. The first ply 38 and the second ply 40 are extended on and between the beads 10 on both sides, along the tread 4 and the sidewalls 6. The first ply 38 is turned up around the cores 34 from the inner side toward the outer side in the axial direction. By the turning-up, the first ply 38 includes a main portion 38a and turned-up portions 38b. The second ply 40 is turned up around the cores 34 from the inner side toward the outer side in the axial direction. By the turning-up, the second ply 40 includes a main portion 40a and turned-up portions 40b. The main portion 40a of the second ply 40 is layered outward of the main portion 38a of the first ply 38 in the radial direction. An end 38c of the turned-up portion 38b of the first ply 38 is disposed outward of an end 40c of the turned-up portion 40b of the second ply 40 in the radial direction. The turned-up portions 38b of the first ply 38 are layered over the main portion 40a of the second ply 40 in a portion outward of the ends 40c of the turned-up portions 40b of the second ply 40 in the radial direction.

The first ply 38 and the second ply 40 each include multiple carcass cords aligned with each other, and topping rubber. An absolute value of an angle of each carcass cord relative to the equator plane is from 75° to 90°. In other words, the carcass forms a radial structure. The carcass cords of the first ply 38 and the carcass cords of the second ply 40 intersect each other. The carcass cords are formed from an organic fiber. Preferable examples of the organic fiber include polyester fibers, nylon fibers, rayon fibers, polyethylene naphthalate fibers, and aramid fibers.

The belt 14 is layered outward of the carcass 12 in the radial direction. The belt 14 reinforces the carcass 12. The belt 14 is disposed inward of the tread 4 in the radial direction. The belt 14 includes an inner layer 42 and an outer layer 44. As is apparent from FIG. 1, in the axial direction, the width of the inner layer 42 is slightly greater than the width of the outer layer 44. The inner layer 42 and the outer layer 44 each include multiple cords aligned with each other, and topping rubber, which are not shown. Each cord is tilted relative to the equator plane. The absolute value of the tilt angle is greater than or equal to 10° and not greater than 35° in general. A direction in which the cords of the inner layer 42 tilt relative to the equator plane is opposite to a direction in which the cords of the outer layer 44 tilt relative to the equator plane. A preferable material of the cords is steel. An organic fiber may be used for the cords. The width of the belt 14 in the axial direction is preferably greater than or equal to 0.7 times the maximum width of the tire 2. The belt 14 may include three or more layers.

The band 16 is disposed outward of the belt 14 in the radial direction. In the axial direction, the width of the band 16 is greater than the width of the belt 14. The band 16 includes a cord and topping rubber, which are not shown. The cord is helically wound. The band 16 has a so-called jointless structure. The cord extends substantially in the circumferential direction. An angle of the cord relative to the circumferential direction is less than or equal to 5° and more preferably less than or equal to 2°. The belt 14 is held by the cord, and lifting of the belt 14 is thus inhibited. The cord is formed from an organic fiber. Preferable examples of the organic fiber include nylon fibers, polyester fibers, rayon fibers, polyethylene naphthalate fibers, and aramid fibers.

The belt 14 and the band 16 form a reinforcing layer 46. The reinforcing layer 46 may be formed merely by the belt 14.

The inner liner 18 is disposed inward of the carcass 12. Near the equator plane, the inner liner 18 is joined to the inner surface of the carcass 12. The inner liner 18 is formed of crosslinked rubber. For the inner liner 18, rubber excellent in airtightness is used. A typical base rubber of the inner liner 18 is isobutylene-isoprene-rubber or halogenated isobutylene-isoprene-rubber. The inner liner 18 maintains internal pressure of the tire 2.

The chafers 20 are disposed near the beads 10. When the tire 2 is mounted on a rim, the chafers 20 contact with the rim. By the contact, portions near the beads 10 are protected. The chafers 20 are formed of, for example, a fabric and rubber impregnated into the fabric. The chafers 20 and the clinches 8 may be integrated with each other. The material of the chafers 20 and the material of the clinches 8 may be the same crosslinked rubber.

The buttress reinforcing layers 22 are disposed along portions from the shoulder regions S of the tread 4 to the outer side portions, in the radial direction, of the sidewalls 6. The buttress reinforcing layers 22 are layered between the main portion 38a of the first ply 38 and the main portion 40a of the second ply 40. Outer ends 22a, in the radial direction, of the buttress reinforcing layers 22 are disposed inward of ends 14a of the belt 14 in the axial direction. Inner ends 22b, in the radial direction, of the buttress reinforcing layers 22 are disposed outward of the maximum width positions of the tire 2 in the radial direction. The inner ends 22b may be disposed at the maximum width positions of the tire 2. Each buttress reinforcing layer 22 is a rubber sheet formed of crosslinked rubber.

The bead reinforcing layers 24 each extend outward from the apex 36 in the radial direction. The bead reinforcing layers 24 are disposed between the main portion 40a and the turned-up portions 40b of the second ply 40 in the axial direction. In the tire 2, the bead reinforcing layers 24 are each disposed inward of the apex 36 in the axial direction. Outer ends 24a of the bead reinforcing layers 24 are disposed inward of the maximum width positions of the tire 2 in the radial direction. The outer ends 24a may be disposed at the maximum width positions of the tire 2. Inner ends 24b of the bead reinforcing layers 24 are each disposed inward of the end 36a of the apex 36 in the radial direction. Each bead reinforcing layer 24 is a rubber sheet formed of crosslinked rubber.

In FIG. 1, a double-headed arrow Hw represents a maximum width position height at the maximum width point of the tire 2. The maximum width position height Hw is measured as a distance, in the radial direction, from the bead base line to the maximum width position of the tire 2. A double-headed arrow Hb represents a height at the outer end 24a of the bead reinforcing layer 24. The height Hb is measured as a distance, in the radial direction, from the bead base line to the outer end 24a of the bead reinforcing layer 24. A double-headed arrow Hs represents a height at the inner end 22b of the buttress reinforcing layer 22. The height Hs is measured as a distance, in the radial direction, from the bead base line to the inner end 22b of the buttress reinforcing layer 22.

In FIG. 1, a double-headed arrow Wa represents a width from the outer end 22a of the buttress reinforcing layer 22 to the outer end 14a of the belt 14. The width Wa is measured along the outer surface of the buttress reinforcing layer 22. The width Wa is measured as a distance to the outer end 22a of the buttress reinforcing layer 22, from a point of intersection of: a straight line that extends through the outer end 14a of the belt 14 so as to be perpendicular to the outer surface of the buttress reinforcing layer 22; and the outer surface of the buttress reinforcing layer 22. A double-headed arrow T represents the thickness of the buttress reinforcing layer 22. The thickness T is measured, at the center position that is distant from the outer end 22a and is distant from the inner end 22b by the same distance, on the outer surface of the buttress reinforcing layer 22.

In the present invention, regions going from the shoulder regions S of the tread 4 into the sidewalls 6 are referred to as buttress portions B, respectively. Each buttress portion B is disposed in a portion where the tread 4 and the sidewall 6 are joined to each other. Therefore, during running, the buttress portion B is under a load from the sidewall 6. Stress is high in the buttress portion B. The tire 2 includes the buttress reinforcing layers 22. The buttress reinforcing layers 22 contribute to improvement of stiffness of the buttress portions B. The buttress reinforcing layers 22 reduce deformation of the buttress portions B during running. In the tire 2, heat generation during running is reduced.

In particular, in the tire 2 that has a reduced weight, the thickness of the rubber is reduced in regions going from the shoulder regions S of the tread 4 into the sidewalls 6. In the tire 2 that has a reduced weight, deformation is more likely to occur in the region going from the shoulder region S into the sidewall 6. In the region, the deformation is likely to occur particularly in the buttress portion B. The tire 2 includes the buttress reinforcing layers 22, whereby deformation in the buttress portions B is reduced in the tire 2.

Each buttress reinforcing layer 22 is a rubber sheet, and formed of crosslinked rubber. The buttress reinforcing layers 22 include no cords, so that increase in weight of the tire 2 is minimized. The buttress reinforcing layers 22 are appropriate to improve stiffness of the tire 2 having a reduced weight in particular.

The tire 2 is obtained by vulcanizing an unvulcanized green tire. The carcass 12 is drawn out by heating and pressurizing during the vulcanization. The buttress reinforcing layers 22 are disposed between the carcass cords of the first ply 38 and the carcass cords of the second ply 40 and the carcass cords of the first ply 38 and the carcass cords of the second ply 40 intersect each other. The buttress reinforcing layers 22, which are disposed between the carcass cords, are inhibited from flowing during the vulcanization. Although each buttress reinforcing layer 22 is a rubber sheet, each buttress reinforcing layer 22 is inhibited from flowing during vulcanization. The buttress reinforcing layers 22 inhibit the volume of rubber between the first ply 38 and the second ply 40 from being reduced. The buttress reinforcing layers 22 contribute to improvement of stiffness of the buttress portions B.

The buttress reinforcing layers 22 are inhibited from flowing during vulcanization, whereby dimensional management of the width Wa, the height Hs, and the thickness T is facilitated. The dimensional management is facilitated, whereby minimization of the volume of the rubber of the buttress portions B from the viewpoint of durability, is facilitated. In particular, in the region of the buttress portions B, deformation is likely to occur during running. Minimization of the volume of the rubber in the region greatly contributes to reduction of heat generation in the tire 2.

In order to obtain an effect of improving stiffness in the buttress portions B, the outer end 22a, of the buttress reinforcing layer 22, on the outer side in the radial direction, is disposed inward of the shoulder region S of the tread 4 in the radial direction. In order to obtain an effect of improving stiffness, the width Wa from the outer end 22a to the outer end 14a of the belt 14 is preferably greater than or equal to 10 (mm). Meanwhile, reduction of the width Wa contributes to reduction in weight of the tire 2. In this viewpoint, the width Wa is preferably not greater than 20 (mm).

The inner end 22b of the buttress reinforcing layer 22 is disposed at the maximum width position of the tire 2 or disposed outward of the maximum width position of the tire 2 in the radial direction. Thus, in a region going from the shoulder region of the tread 4 into the sidewall 6, an effect of improving stiffness is obtained. In order to obtain the effect of improving stiffness, a difference (Hs-Hw) between the height Hs up to the inner end 22b and the maximum width position height Hw of the tire 2 is preferably less than or equal to 15 (mm) and more preferably less than or equal to 10 (mm).

Meanwhile, when the height Hs is less than the maximum width position height Hw of the tire 2, a portion, at the maximum width position, of the tire 2 is reinforced by the buttress reinforcing layer 22. Enhancement of stiffness at the maximum width position of the tire 2 results in increase of deformation in the region going from the shoulder region S of the tread 4 into the sidewall 6. The increase of the deformation in this region causes increase of rolling resistance in the tire 2. In order to reduce rolling resistance, the height Hs is preferably greater than the height Hw.

In order to obtain an effect of improving stiffness, the thickness T of the buttress reinforcing layer 22 is preferably greater than or equal to 0.8 (mm) and more preferably greater than or equal to 0.9 (mm). Meanwhile, increase of the thickness T causes increase of rolling resistance. In order to reduce rolling resistance, the thickness of the buttress reinforcing layer 22 is preferably not greater than 1.2 (mm) and more preferably not greater than 1.1 (mm).

By the buttress reinforcing layers 22, reduction of the volume of the rubber between the first ply 38 and the second ply 40 is inhibited. Particularly in the region of the buttress portions, deformation is likely to occur during running.

The buttress reinforcing layers 22 inhibit the carcass cords of the first ply 38 and the carcass cords of the second ply 40 from rubbing against each other due to deformation of the buttress portion B during running. The buttress reinforcing layers 22 contribute also to improvement of durability of the tire 2.

The tire 2 includes the bead reinforcing layers 24. The outer end 24a of the bead reinforcing layer 24 is disposed at the maximum width position of the tire 2 or disposed inward of the maximum width position of the tire 2 in the radial direction. When the bead reinforcing layers 24 are provided, stiffness of the sidewalls 6 in regions from the beads 10 to the outer ends 24a, in the radial direction, of the bead reinforcing layers 24, is improved. The bead reinforcing layers 24 contribute to improvement of stiffness of the tire 2. The bead reinforcing layers 24 contribute to improvement of lateral stiffness in particular.

The tire 2 includes the buttress reinforcing layers 22. Therefore, even when the bead reinforcing layers 24 are provided, increase of deformation in regions going from the shoulder regions S of the tread 4 into the sidewalls 6 is inhibited. When the tire 2 includes the buttress reinforcing layers 22 and the bead reinforcing layers 24, the tire 2 allows reduction in heat generation and is excellent also in lateral stiffness.

In order to improve stiffness, a difference (Hb-Hw) between the height Hb at the outer end 24a of the bead reinforcing layer 24 and the maximum width position height Hw of the tire 2, is preferably greater than or equal to - 10 (mm) and more preferably greater than or equal to -5 (mm). Meanwhile, when the difference (Hb-Hw) is greater than 0, that is, when the outer end 24a of the bead reinforcing layer 24 is outward of the maximum width position of the tire 2, deformation in the region going from the shoulder region S of the tread 4 into the sidewall 6 is increased. Increase of the deformation in this region causes increase of rolling resistance of the tire 2. In order to reduce rolling resistance, the difference (Hb-Hw) is not greater than 0. The difference (Hb-Hw) is preferably not greater than -1 (mm).

In the tire 2, the carcass cords are formed of a polyester fiber. The carcass cords formed of a polyester fiber is more easily drawn out as compared to carcass cords formed of an aramid fiber. The carcass cords that are easily drawn out tend to cause reduction of the volume of rubber. Even when the carcass cords that are relatively easily drawn out are used, the buttress reinforcing layers 22 inhibit reduction of the volume of the rubber. The buttress reinforcing layers 22 are appropriate to the tire 2 that has the carcass cords formed of a polyester fiber. The buttress reinforcing layers 22 are appropriate also to a tire that has carcass cords formed of a nylon fiber, similarly to the tire that has the carcass cords formed of a polyester fiber.

In the present invention, the dimensions and angles of the components of the tire 2 are measured in a state where the tire 2 is mounted on a normal rim and inflated with air to a normal internal pressure. During the measurement, no load is applied to the tire 2. In the description herein, the normal rim represents a rim that is specified according to the standard with which the tire 2 complies. The "standard rim" in the JATMA standard, the "Design Rim" in the TRA standard, and the "Measuring Rim" in the ETRTO standard are normal rims. In the description herein, the normal internal pressure represents an internal pressure that is specified according to the standard with which the tire 2 complies. The "maximum air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are normal internal pressures.

EXAMPLES

Hereinafter, effects of the present invention will become apparent according to examples. However, the present invention should not be restrictively construed based on the description of examples.

[Example 1]

A tire having the structure shown in FIG. 1 was prepared. The size of the tire was "P275/50R21 113V PT3A". The "thickness of buttress portion" is indicated below in Table 1 and Table 2 as an index with the rubber volume of the buttress portion of the tire of comparative example 1 being 100 as a reference value. The less the index is, the less the rubber volumes is.

[Comparative example 1]

A tire having the same structure as in example 1 except that no buttress reinforcing layers were provided and the rubber volume of the buttress portion was 100 as the reference value, was prepared. This tire was a commercially available tire.

[Comparative example 2]

A tire having the same structure as in example 1 except that no buttress reinforcing layers were provided, was prepared. This tire was also a commercially available tire.

[Examples 2 to 3]

Tires each having the same structure as in example 1 except that the difference (Hs-Hw) was different as indicated in Table 1, were prepared.

[Examples 4 to 7]

Tires each having the same structure as in example 1 except that the difference (Hb-Hw) and the difference (Hs-Hw) were different as indicated in Table 2, were prepared.

[Example 8 and Comparative example 3]

Tires each having the same structure as in example 1 except that the difference (Hb-Hw) was different as indicated in Table 2, were prepared.

[Weight]

A weight of each tire was measured. The weight is indicated below in Table 1 and Table 2 as an index with the weight of comparative example 1 being 100 as a reference value. The less the value of the index is, the less the weight is and the better the evaluation is.

[Rolling resistance coefficient]

Each tire was mounted on a normal rim of "21×8.5J". For each tire, a rolling resistance testing machine was used to measure a rolling resistance coefficient (RRC) under the following measurement conditions. The results thereof are indicated below in Table 1 and Table 2 as indexes with the result of comparative example 1 being 100 as a reference value. The less the value of the index is, the less rolling resistance is and the better the evaluation is.
Internal pressure: 230 (kPa)
Load: 4.41 (kN)
Speed: 80 (km/h)

[Lateral stiffness]

Each tire was mounted on a normal rim, and a tire static tester was used to measure a lateral stiffness constant under the following measurement conditions. The results are indicated below in Table 1 and Table 2 as indexes with the result of comparative example 1 being 100 as a reference value. The greater the value of the index is, the higher lateral stiffness is and the better the evaluation is.
Internal pressure: 230 (kPa)
Load: 5.30 (kN)

[Cornering power]

Each tire was mounted on a normal rim, and a flat belt type test machine was used to measure cornering power under the following measurement conditions. The results are indicated below in Table 1 and Table 2 as indexes with the result of comparative example 1 being 100 as a reference value. The greater the value of the index is, the higher cornering power is and the better the evaluation is.
Internal pressure: 230 (kPa)
Load: 5.30 (kN)
Speed: 20 (km/h)

[Steering stability]

Each tire was mounted on a normal rim, and inflated with air to an internal pressure of 230 (kPa). The tires were mounted to a four-wheel-drive SUV having an engine displacement of 4600 (cc) (4600 (cm$^3$)). A driver was caused to drive the SUV on a test course, and evaluate steering stability. The results are indicated below in Table 1 and Table 2 as indexes with the result of comparative example 1 being 100 as a reference value. The greater the value of the index is, the better the evaluation is.

Table 1 Evaluation result

|  | Comp. ex. 1 | Comp. ex. 2 | Ex.1 | Ex.2 | Ex.3 |
|---|---|---|---|---|---|
| Thickness of buttress portion | 100 | 80 | 80 | 80 | 80 |
| (Hb-Hw) (mm) | 0 | 0 | -5 | -5 | -5 |
| Buttress reinforcing layer | Not provided | Not provided | Provided | Provided | Provided |
| (Hs-Hw) (mm) | - | - | 10 | +5 | +20 |
| Width Wa (mm) | - | - | 15 | 15 | 15 |
| Weight | 100 | 80 | 80 | 85 | 80 |
| Rolling resistance | 100 | 80 | 80 | 85 | 80 |
| Lateral stiffness | 100 | 80 | 110 | 100 | 105 |
| Cornering power | 100 | 80 | 110 | 100 | 105 |
| Steering stability | 100 | 80 | 110 | 100 | 105 |

Table 2 Evaluation result

|  | Ex. 4 | Ex. 5 | Ex.6 | Ex. 7 | Ex. 8 | Comp. ex. 3 |
|---|---|---|---|---|---|---|
| Thickness of buttress portion | 80 | 80 | 80 | 80 | 80 | 80 |
| (Hb-Hw) (mm) | -10 | 0 | -10 | 0 | -15 | 5 |
| Buttress reinforcing layer | Provided | Provided | Provided | Provided | Provided | Provided |
| (Hs-Hw) (mm) | 0 | 0 | 15 | 15 | 10 | 10 |
| Width Wa (mm) | 15 | 15 | 15 | 15 | 15 | 15 |
| Weight | 82 | 85 | 78 | 82 | 80 | 85 |
| Rolling resistance | 87 | 90 | 78 | 87 | 80 | 95 |
| Lateral stiffness | 100 | 110 | 105 | 100 | 90 | 110 |
| Cornering power | 100 | 110 | 105 | 100 | 90 | 110 |
| Steering stability | 100 | 110 | 105 | 100 | 90 | 110 |

As indicated in Tables 1 and 2, evaluation is higher in the tires of examples than in the tires of comparative examples. The evaluation result clearly indicates that the present invention is superior.

The tire described above can be mounted to not only SUVs but also various vehicles such as passenger cars, lightweight trucks, light trucks, trucks, and buses.

The foregoing description is in all aspects illustrative, and various modifications can be devised without departing from the invention, as defined in the appended claims.

## Claims

1. A pneumatic tire (2) comprising:

   a tread (4);
   a pair of sidewalls (6);
   a pair of beads (10), wherein each bead (10) includes a core (34) and an apex (36) that extends outward from the core (34) in the radial direction, the apex (36) being tapered toward an end (36a) on the outer side in the radial direction;
   a carcass (12); and

a buttress reinforcing layer (22), wherein
the sidewalls (6) extend almost inward from ends, respectively, of the tread (4) in a radial direction,
the beads (10) are disposed inward of the sidewalls (6), respectively, in the radial direction,
the carcass (12) is extended on and between one of the beads (10) and the other of the beads (10), along inner sides of the tread (4) and the sidewalls (6),
the carcass (12) includes a first ply (38) and a second ply (40),
the first ply (38) and the second ply (40) are turned up around the beads (10) and each have a main portion (38a, 40a) that is extended on and between the beads (10) on both sides and a turned-up portion (38b, 40b), wherein the main portion (40a) of the second ply (40) is layered outward of the main portion (38a) of the first ply (38),
an end (38c) of the turned-up portion (38b) of the first ply (38) is disposed outward of an end (40c) of the turned-up portion (40b) of the second ply (40) in the radial direction, and the turned-up portion (38b) of the first ply (38) is layered over the main portion (40a) of the second ply (40) in a portion outward of the end (40c) of the turned-up portion (40b) of the second ply (40) in the radial direction,
the buttress reinforcing layer (22) is formed of a rubber sheet,
the buttress reinforcing layer (22) extends along the first ply (38) and the second ply (40) between the first ply (38) and the second ply (40),
the buttress reinforcing layer (22) is disposed along a portion from the shoulder region (S) of the tread (4) to the outer side portion, in the radial direction, of the sidewall (6),
the buttress reinforcing layer (22) is layered between the main portion (38a) of the first ply (38) and the main portion (40a) of the second ply (40),
an outer end (22a) of the buttress reinforcing layer (22) is disposed inward of a shoulder region (S) of the tread (4) in the radial direction, and
an inner end (22b) of the buttress reinforcing layer (22) is disposed at a maximum width position of the tire (2) or disposed outward of the maximum width position of the tire (2) in the radial direction,
**characterized in that**
an end (38c) of the turned-up portion (38b) of the first ply (38) and an end (40c) of the turned-up portion (40b) of the second ply (40) are disposed outward of the maximum width position of the tire (2) in the radial direction, and the tire comprises a bead reinforcing layer (24), wherein
the bead reinforcing layer (24) extends outward from the apex (36) of the bead (10) in the radial direction,
the bead reinforcing layer (24) is disposed between the main portion (40a) and the turned-up portion (40b) of the second ply (40) in the axial direction,
the bead reinforcing layer (24) is disposed inward of the apex (36) in the axial direction,
an outer end (24a) of the bead reinforcing layer (24) is disposed at the maximum width position of the tire (2) or disposed inward of the maximum width position of the tire (2) in the radial direction, and
an inner end (24b) of the bead reinforcing layer (24) is disposed inward of the outer end (36a) of the apex (36) in the radial direction.

2. The tire according to claim 1, wherein

when Hb represents a height at the outer end (24a) of the bead reinforcing layer (24), and Hw represents a maximum width position height of the tire (2),
the following relational expression (1) is satisfied:

$$(Hb–Hw) \geq -10 \quad mm \ (1).$$

3. The tire according to any one of claims 1 and 2, comprising a belt (14) that is layered over the carcass (12) in a portion inward of the tread (4) in the radial direction,

the outer end (22a) of the buttress reinforcing layer (22) is disposed inward of an outer end (14a) of the belt (14) in an axial direction, and
a width Wa from the outer end (22a) of the buttress reinforcing layer (22) to the outer end (14a) of the belt (14) is greater than or equal to 10 mm and not greater than 20 mm.

4. The tire according to any one of claims 1 to 3, wherein

when Hs represents a height at the inner end (22b) of the buttress reinforcing layer (22), and Hw represents a maximum width position height of the tire (2),

the following relational expression (2) is satisfied:

$$(Hs-Hw) \leq 15 \qquad mm \ (2).$$

5. The tire according to any one of claims 1 to 4, wherein a thickness of the buttress reinforcing layer (22) is greater than or equal to 0.8 mm and not greater than 1.2 mm.

6. The tire according to any one of claims 1 to 5, wherein

the first ply (38) and the second ply (40) each include a carcass cord and topping rubber, and
the carcass cord is formed of a polyester fiber.

**Patentansprüche**

1. Luftreifen (2), umfassend:

eine Lauffläche (4);
ein Paar Seitenwände (6);
ein Paar Wülste (10), wobei jeder Wulst (10) einen Kern (34) und einen Kernreiter (36) umfasst, der sich von dem Kern (34) in der radialen Richtung nach außen erstreckt, wobei der Kernreiter (36) zu einem Ende (36a) auf der Außenseite in der radialen Richtung hin verjüngt ist;
eine Karkasse (12); und
eine Stützverstärkungsschicht (22), wobei
sich die Seitenwände (6) von den jeweiligen Enden der Lauffläche (4) in einer radialen Richtung nahezu nach innen erstrecken,
die Wülste (10) jeweils in der radialen Richtung innen von den Seitenwänden (6) angeordnet sind,
die Karkasse (12) auf und zwischen einem der Wülste (10) und dem anderen der Wülste (10) entlang von Innenseiten der Lauffläche (4) und der Seitenwände (6) ausgedehnt ist,
die Karkasse (12) eine erste Lage (38) und eine zweite Lage (40) umfasst,
die erste Lage (38) und die zweite Lage (40) um die Wülste (10) herum umgeschlagen sind und jeweils einen Hauptabschnitt (38a, 40a), der auf und zwischen den Wülsten (10) auf beiden Seiten ausgedehnt ist, und einen Umschlagabschnitt (38b, 40b) aufweisen, wobei der Hauptabschnitt (40a) der zweiten Lage (40) außen von dem Hauptabschnitt (38a) der ersten Lage (38) geschichtet ist,
ein Ende (38c) des Umschlagabschnitts (38b) der ersten Lage (38) in der radialen Richtung außen von einem Ende (40c) des Umschlagabschnitts (40b) der zweiten Lage (40) angeordnet ist, und der Umschlagabschnitt (38b) der ersten Lage (38) über den Hauptabschnitt (40a) der zweiten Lage (40) in einem Abschnitt in der radialen Richtung außen von dem Ende (40c) des Umschlagabschnitts (40b) der zweiten Lage (40) geschichtet ist,
die Stützverstärkungsschicht (22) aus einer Gummiplatte gebildet ist,
die Stützverstärkungsschicht (22) sich entlang der ersten Lage (38) und der zweiten Lage (40) zwischen der ersten Lage (38) und der zweiten Lage (40) erstreckt,
die Stützverstärkungsschicht (22) entlang eines Abschnitts von dem Schulterbereich (S) der Lauffläche (4) zu dem Außenseitenabschnitt in der radialen Richtung der Seitenwand (6) angeordnet ist,
die Stützverstärkungsschicht (22) zwischen den Hauptabschnitt (38a) der ersten Lage (38) und den Hauptabschnitt (40a) der zweiten Lage (40) geschichtet ist,
ein äußeres Ende (22a) der Stützverstärkungsschicht (22) in der radialen Richtung innen von einem Schulterbereich (S) der Lauffläche (4) angeordnet ist, und
ein inneres Ende (22b) der Stützverstärkungsschicht (22) in der radialen Richtung an einer Maximalbreitenposition des Reifens (2) oder außen von der Maximalbreitenposition des Reifens (2) angeordnet ist,
**dadurch gekennzeichnet, dass**
ein Ende (38c) des Umschlagabschnitts (38b) der ersten Lage (38) und ein Ende (40c) des Umschlagabschnitts (40b) der zweiten Lage (40) in der radialen Richtung außen von der Maximalbreitenposition des Reifens (2) angeordnet sind, und

der Reifen eine Wulstverstärkungsschicht (24) umfasst, wobei
die Wulstverstärkungsschicht (24) sich von dem Kernreiter (36) des Wulsts (10) in der radialen Richtung nach außen erstreckt,
die Wulstverstärkungsschicht (24) in der axialen Richtung zwischen dem Hauptabschnitt (40a) und dem Umschlagabschnitt (40b) der zweiten Lage (40) angeordnet ist,
die Wulstverstärkungsschicht (24) in der axialen Richtung innen von dem Kernreiter (36) angeordnet ist,
ein äußeres Ende (24a) der Wulstverstärkungsschicht (24) in der radialen Richtung an der Maximalbreitenposition des Reifens (2) oder innen von der Maximalbreitenposition des Reifens (2) angeordnet ist, und
ein inneres Ende (24b) der Wulstverstärkungsschicht (24) in der radialen Richtung innen von dem äußeren Ende (36a) des Kernreiters (36) angeordnet ist.

2. Reifen nach Anspruch 1, wobei,

wenn Hb eine Höhe an dem äußeren Ende (24a) der Wulstverstärkungsschicht (24) darstellt, und Hw eine Maximalbreitenpositionshöhe des Reifens (2) darstellt,
der folgende relationale Ausdruck (1) erfüllt ist:

$$(Hb - Hw) \geq -10 \text{ mm} \qquad\qquad (1)$$

3. Reifen nach einem der Ansprüche 1 und 2, umfassend einen Gürtel (14), der über die Karkasse (12) in einem Abschnitt in der radialen Richtung innen von der Lauffläche (4) geschichtet ist,

wobei das äußere Ende (22a) der Stützverstärkungsschicht (22) in der axialen Richtung innen von einem äußeren Ende (14a) des Gürtels (14) angeordnet ist, und
eine Breite Wa von dem äußeren Ende (22a) der Stützverstärkungsschicht (22) zu dem äußeren Ende (14a) des Gürtels (14) größer als oder gleich 10 mm und nicht größer als 20 mm ist.

4. Reifen nach einem der Ansprüche 1 bis 3, wobei,

wenn Hs eine Höhe an dem inneren Ende (22b) der Stützverstärkungsschicht (22) darstellt, und Hw eine Maximalbreitenpositionshöhe des Reifens (2) darstellt,
der folgende relationale Ausdruck (2) erfüllt ist:

$$(Hs - Hw) \leq 15 \text{ mm} \qquad\qquad (2)$$

5. Reifen nach einem der Ansprüche 1 bis 4, wobei eine Dicke der Stützverstärkungsschicht (22) größer als oder gleich 0,8 mm und nicht größer als 1,2 mm ist.

6. Reifen nach einem der Ansprüche 1 bis 5, wobei

die erste Lage (38) und die zweite Lage (40) jeweils einen Karkasskord und einen Gummierungskautschuk umfassen, und
der Karkasskord aus einer Polyesterfaser gebildet ist.

**Revendications**

1. Bandage pneumatique (2) comprenant :

une bande de roulement (4) ;
une paire de parois latérales (6) ;
une paire de talons (10), dans laquelle chaque talon (10) inclut une âme (34) et un sommet (36) qui s'étend vers l'extérieur depuis l'âme (34) dans la direction radiale, le sommet (36) étant effilé en direction d'une extrémité (36a) sur le côté extérieur dans la direction radiale ;
une carcasse (12) ; et

une couche de renforcement de soutien (22),

dans lequel

les parois latérales (6) s'étendent pratiquement vers l'intérieur depuis des extrémités, respectivement, de la bande de roulement (4) dans une direction radiale,

les talons (10) sont disposés à l'intérieur des parois latérales (6), respectivement, dans la direction radiale,

la carcasse (12) s'étend sur et entre l'un des talons (10) et l'autre des talons (10), le long des côtés intérieurs de la bande de roulement (4) et des parois latérales (6),

la carcasse (12) inclut une première nappe (38) et une seconde nappe (40), la première nappe (38) et la seconde nappe (40) sont rabattues vers le haut autour des talons (10) et chacune comprend une portion principale (38a, 40a) qui s'étend sur et entre les talons (10) sur les deux côtés et une portion rabattue vers le haut (38b, 40b), dans lesquels la portion principale (40a) de la seconde nappe (40) est posée en couche à l'extérieur de la portion principale (38a) de la première nappe (38),

une extrémité (38c) de la portion rabattue vers le haut (38b) de la première nappe (38) est disposée vers l'extérieur d'une extrémité (40c) de la portion rabattue vers le haut (40b) de la seconde nappe (40) dans la direction radiale, et la portion rabattue vers le haut (38b) de la première nappe (38) est posée en couche sur la portion principale (40a) de la seconde nappe (40) dans une portion à l'extérieur de l'extrémité (40c) de la portion rabattue vers le haut (40b) de la seconde nappe (40) dans la direction radiale,

la couche de renforcement de soutien (22) est formée d'une feuille en caoutchouc,

la couche de renforcement de soutien (22) s'étend le long de la première nappe (38) et de la seconde nappe (40) entre la première nappe (38) et la seconde nappe (40),

la couche de renforcement de soutien (22) est disposée le long d'une portion allant de la région d'épaulement (S) de la bande de roulement (4) jusqu'à la portion latérale extérieure, dans la direction radiale, de la paroi latérale (6),

la couche de renforcement de soutien (22) est posée en couche entre la portion principale (38a) de la première nappe (38) et la portion principale (40a) de la seconde nappe (40),

une extrémité extérieure (22a) de la couche de renforcement de soutien (22) est disposée à l'intérieur d'une région d'épaulement (S) de la bande de roulement (4) dans la direction radiale, et

une extrémité intérieure (22b) de la couche de renforcement de soutien (22) est disposée à une position de largeur maximum du pneumatique (2) ou est disposée à l'extérieur de la position de largeur maximum du pneumatique (2) dans la direction radiale,

**caractérisé en ce que**

une extrémité (38c) de la portion rabattue vers le haut (38b) de la première nappe (38) et une extrémité (40c) de la portion rabattue vers le haut (40b) de la seconde nappe (40) sont disposées à l'extérieur de la position de largeur maximum du pneumatique (2) dans la direction radiale, et

le pneumatique comprend une couche de renforcement de talon (24),

dans lequel

la couche de renforcement de talon (24) s'étend vers l'extérieur depuis le sommet (36) du talon (10) dans la direction radiale,

la couche de renforcement de talon (24) est disposée entre la portion principale (40a) et la portion rabattue vers le haut (40b) de la seconde nappe (40) dans la direction axiale,

la couche de renforcement de talon (24) est disposée à l'intérieur du sommet (36) dans la direction axiale,

une extrémité extérieure (24a) de la couche de renforcement de talon (24) est disposée à la position de largeur maximum du pneumatique (2) ou est disposée à l'intérieur de la position de largeur maximum du pneumatique (2) dans la direction radiale, et

une extrémité intérieure (24b) de la couche de renforcement de talon (24) est disposée à l'intérieur de l'extrémité extérieure (36a) du sommet (36) dans la direction radiale.

2. Pneumatique selon la revendication, dans lequel

quand Hb représente une hauteur à l'extrémité extérieure (24a) de la couche de renforcement de talon (24), et Hw représente une hauteur de la position de largeur maximum de pneumatique (2), l'expression de relation suivante (1) est satisfaite :

$$(Hb-Hw) \geq -10 \text{ mm (1)}.$$

3. Pneumatique selon l'une quelconque des revendications 1 et 2, comprenant une ceinture (14) qui est posée en couche sur la carcasse (12) dans une portion à l'intérieur de la bande de roulement (4) dans la direction radiale,

l'extrémité extérieure (22a) de la couche de renforcement de soutien (22) est disposée à l'intérieur d'une extrémité extérieure (14a) de la ceinture (14) dans une direction axiale, et

une largeur Wa depuis l'extrémité extérieure (22a) de la couche de renforcement de soutien (22) jusqu'à l'extrémité extérieure (14a) de la ceinture (14) est supérieure ou égale à 10 mm et n'est pas supérieure à 20 mm.

4. Pneumatique selon l'une quelconque des revendications 1 à 3, dans lequel
quand Hs représente une hauteur à l'extrémité intérieure (22b) de la couche de renforcement de soutien (22), et Hw représente une hauteur de la position de largeur maximum du pneumatique (2), l'expression de relation suivante (2) est satisfaite :

$$(Hs-Hw) \leq 15 \text{ mm (2)}.$$

5. Pneumatique selon l'une quelconque des revendications 1 à 4, dans lequel une épaisseur de la couche de renforcement de soutien (22) est supérieure ou égale à 0,8 mm et n'est pas supérieure à 1,2 mm.

6. Pneumatique selon l'une quelconque des revendications 1 à 5, dans lequel
la première nappe (38) et la seconde nappe (40) incluent chacune un câblé de carcasse et un caoutchouc d'enrobage, et
le câblé de carcasse est formé de fibres en polyester.

FIG. 1

EP 3 189 979 B1

**EP 3 189 979 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016002663 A
- JP 2014113957 A
- US 20140158270 A
- EP 0638445 A
- US 3717190 A
- US 3292681 A